# EUROPÄISCHE PATENTSCHRIFT

(11) **EP 2 140 499 B1**
(45) Veröffentlichungstag und Bekanntmachung des Hinweises auf die Patenterteilung: **20.06.2012**
(21) Anmeldenummer: 08736052.5
(22) Anmeldetag: 10.04.2008
(51) Int. Cl.: F24J 2/52, H01L 31/042, H01L 31/048

(54) **SOLARMODUL FÜR SCHRÄGDACH**
SOLAR MODULE FOR PITCHED ROOVES
MODULE SOLAIRE POUR TOIT PENTU

(30) Priorität: 26.04.2007 DE 102007020151
(43) Veröffentlichungstag der Anmeldung: 06.01.2010
(73) Patentinhaber: C.M.S. Gmbh, 41334 Nettetal (DE)
(72) Erfinder: REICH, Michael, 41334 Nettetal (DE)
(74) Vertreter: Gille Hrabal
(86) Internationale Anmeldenummer: PCT/EP2008/054330
(87) Internationale Veröffentlichungsnummer: WO 2008/132031

(56) Entgegenhaltungen:
- EP-A- 0 917 210
- EP-A- 1 447 852
- WO-A-2006/076719
- DE-A1-102004 015 305
- DE-A1-102005 050 884
- DE-U1- 29 719 900
- US-A- 4 936 063
- US-A1- 2004 011 354

## Beschreibung

Die Erfindung betrifft ein Solarmodul für den Einbau In ein Schrägdach sowie ein Verfahren für das Montieren der Solarmodule.

Mit einem Solarmodul im Sinne der vorliegenden Erfindung wird das Licht der Sonne In nutzbare Energie umgewandelt und zwar Insbesondere direkt In elektrische Energie. Andere Solarmodule nutzen das Licht der Sonne zur Erwärmung von Wasser.

Ein Solarmodul, mit dem elektrischer Strom erzeugt wird, verfügt über eine transparente, strahlungs- und witterungsbeständige Abdeckung, gegen Korrosion geschützte elektrische Anschlüsse, einen Schutz der spröden Solarzelle vor mechanischen Einflüssen, Handhabungs- und Befestigungsmöglichkelten. Ferner ist eine ausreichende Kühlung sicherzustellen.

Solarmodule werden u. a, auf Dächern montiert. Insbesondere Im Fall der Gewinnung von elektrischem Strom stellen Anordnungen zum Montieren von Solarmodulen sicher, dass die vorgenannten Anforderungen erfüllt werden.

Aus den Druckschriften WO 2006/076719 sowie EP 0 91 7 210 A2 ist ein Solarmodul für den Einbau in ein Schrägdach bekannt. Das Solarmodul umfasst einen Rahmen und eine vom Rahmen gehaltene Solarzelle.

Aus der DE 20200601858b U1 Ist eine Anordnung zum Montieren von Solormodulen auf Dächern bekannt, bei der auf einer Unterkonstruktion eine Klemmeinrichtung befestigt ist, mit der ein Solarmodul lösbar auf einem Dach befestigt wird. Die DE 202006015917 U1 lehrt, eine Solaranlage über Ständer auf einem Hausdach zu befestigen.

Solche oberhalb von Ziegeln eines Daches zu befestigende Solarmodule weisen mehrere Nachteile auf. Erstens sind diese optisch wenig ansprechend, da sie den Charakter eines Daches verändern. Zweitens ist es erforderlich, zusätzlich zu Dachziegeln oder einer anderen Dachabdeckung eine weitere Abdeckung in Form der Module anzubringen, was wirtschaftlich nicht sinnvoll ist.

Aus der US RE38,988 E ist bekannt, Solarmodule auf einer speziellen Unterkonstruktion aufzubringen und die Unterkonstruktionen über Nut-Ferder-Verbindungen miteinander zu verbinden. Die Solarmodule nebst Unterkonstruktionen sollen auf Gebäudedächern aufgebracht werden. Die Unterkonstruktion vermag weder die Solarmodule zu schützen noch ein dichtes Dach zu ersetzen.

Es sind daher Anordnungen entwickelt worden, mit denen Solarmodule in ein schräges Hausdach integriert werden. Diese können eine Dachabdeckung, also zum Beispiel Dachziegel ersetzen.

Die DE 10 2004 015 305 A1 offenbart eine Solarzelleneinheit mit einem Modulrahmen, der um ein Solarmodul herum vorhanden ist. Der Modulrahmen umfasst ein Ableitkanal, der entlang einem Rand des Modulrahmens angeordnet ist. Durch den Ableitkanal wird vermieden, dass Regenwasser die Grundfläche eines Daches nicht erreicht. Problematisch ist bei diesem Stand der Technik die zuverlässige Befestigung der Solarmodule auf einem Dach. Denn aus Kostengründen muss ein Solarmodul sehr viel sicherer im Vergleich zu Dachziegeln auf einem Dach befestigt sein. Wind kann nachteilhaft relativ leicht an den Unterkanten der aus der DE 10 2004 015 305 A1 bekannten Solarmodule angreifen und diese abheben und so aushebeln.

Aus der DE 198 23 356 A1 ist bekannt, einen Dachziegel zur Nutzung der Sonnenenergie mit einer Mulde zu versehen, in die eine Solarzelle eingesetzt werden kann. Problematisch ist bereits die Kühlung einer eingesetzten Solarzelle. Hierfür muss nach der DE 198 23 356 A1 zwischen Dachziegel und Solarzelle zwingend ein Wärmetauscher eingesetzt werden, was aber aus Platzgründen in der Praxis wirtschaftlich nicht zu realisieren ist. Es gibt ferner eine doppelte Abdeckung, nämlich zum einen die Dachziegel und zum anderen die eigentliche Solarzelle.

Aus der JP 2002088993 A ist bekannt, bei einem schrägen Dach Dachziegel teilweise gegen Solarmodule auszutauschen.

Die Firma Ubbink Econergy Solar GmbH aus Köln, im Internet zu finden unter www.ubbinksolar.de, bietet ein Befestigungssystem für Solarmodule unter der Bezeichnung InterSole an, welches unterhalb der Dachziegel angebracht wird. Auf den Dachlatten wird eine Kunststoffwanne angebracht, die bis unterhalb der Ziegel reicht. Diese Kunststoffwanne ist erforderlich, um eine Dichtigkeit zu erreichen. Auf der Kunststoffwanne werden Aluminiumschienen montiert. Die Aluminiumschienen dienen der Aufnahme der gerahmten Fotovoltaikmodule, also der Solarzellen.

Die Module grenzen Stoß an Stoß. Dies hat zur Konsequenz, dass ein Spalt zwischen den einzelnen Modulen verbleibt. Hierein kann Wasser eindringen. Daher ist eine Kunststoffwanne unterhalb der Module erforderlich, um die Wasserdichtigkeit des Daches zu gewährleisten. Dieses System verfügt ähnlich wie die auf ein Dach aufgesetzten Module über ein System zur Abdichtung des Daches und über ein weiteres System zur Energiegewinnung. Dies macht die Sache relativ kostenaufwändig.

Um zu einem verbesserten System zu gelangen, bietet die Firma Conergy AG, Hamburg, zu finden unter www.conergy.de ein System an, um Solarmodule vergleichbar wie Dachziegel auf einem Dach zu montieren. Dies bedeutet, Solarmodule überlappen vergleichbar wie Dachziegel. Zu diesem Zweck werden Schienen auf den Dachlatten senkrecht dazu montiert. Die Schienen dienen der Befestigung der Solarmodule. Die Schienen dienen der Aufnahme rahmenloser Module und müssen daher ganz exakt ausgerichtet werden. Andernfalls werden die Module einem seitlichen Druck ausgesetzt, was ein Zerspringen der Module zur Folge haben kann. Um eine Überlappung zu erzielen, weist das Schienensystem Lippen auf, die für den entsprechenden Abstand im Überlappungsbereich sorgen. Dieses System hat sich störanfällig erwiesen, da ein falsches Umknicken der Lippen zur Folge hat, dass das System undicht ist. Entsprechend arbeitsaufwändig ist das Montieren dieses vorbekannten Systems.

Die Schienen dienen dem senkrechten Ablauf von Wasser zwischen zwei Modulen. Allerdings verbleiben im Übergangsbereich, insbesondere im Eckbereich stets Bereiche, die durch das Dach hindurch führen. Daher ist dieses System für Dächer mit einer Neigung von weniger als 30 Grad ungeeignet, da hier die Dichtigkeit nicht gewährleistet ist. Wind kann Feuchtigkeit, also Regen uns Schnee durch die undichte Stelle hindurch in das Dachinnere drücken.

Aus der US 2004/001 1354 A1 sind Solarmodule bekannt, die mit einem Rahmen versehen sind, der vergleichbar dick wie die eigentliche Solarzelle ist, also die Einheit, mit der nutzbare Energie erzeugt wird. Wie bei Dachziegeln bekannt, werden die Rahmen mit einem oberen Rahmenelement an einer horizontalen Dachlatte eingehakt. Das untere Rahmenelement liegt auf einem angrenzenden oberen Rahmenelement eines darunter angrenzenden Solarmoduls auf. Das aus der US 2004/001 1354 A1 bekannte Rahmenelement ist sehr dünn und zwar nur unwesentlich dicker als die eigentliche Solarzelle. Ein dünner Rahmen bietet einen entsprechend geringen Schutz gegen Verwindungen, was ein Zerbrechen der Solarzelle zur Folge haben kann. Auch kann Wind die hieraus bekannten Solarmodule an der Unterkante relativ leicht anheben. Es droht, dass die teuren Solarmodule sich vom Dach lösen und zerstört werden. Diese Probleme treten auch bei den aus der Druckschrift US 7,012,188 B2 bekannten Solarmodulen auf.

Die Druckschrift DE 295 21 509 U1 offenbart Solarmodule, die mit einem flachen, nicht hinreichend verwindungssteifen Rahmen versehen sind. Unterhalb des Rahmens sind wenigstens zwei Abstandshalter vorgesehen, die den Rahmen ebenfalls nicht hinreichend stabilisieren können. Ein Haken ist an der Unterseite der Abstandshalter angebracht, der an einer Dachunterkonstruktion eingehängt wird. Auch die hieraus bekannten Solarmodule sind nicht hinreichend auf einem Dach gesichert.

Aufgabe der Erfindung ist es, eine Einrichtung für die Befestigung von Solarmodulen zu schaffen, die eine gefällige Integration in ein Dach ermöglicht und montagefreundlich ist.

Zur Lösung der Aufgabe wird erfindungsgemäß ein Rahmen bereitgestellt, der aus zwei seitlichen, einem oberen und einem unteren Rahmenelement besteht. Jedes der vier Rahmenelemente umfasst einen Bereich mit einem rechteckigen Querschnitt mit zwei langen und zwei schmalen Selten. Die vier Rahmenelemente sind so miteinander verbunden, dass die langen Selten senkrecht zur Hauptoberfläche des Solarmoduls bzw. der Solarzelle angeordnet sind. Hierdurch wird erreicht, dass der Rahmen verwindungssteif ist. Das Solarmodul kann daher vergleichsweise unproblematisch transportiert und montiert werden.

Das obere Rahmenelement weist erfindungsgemäß gegenüber den übrigen Rahmenelementen einen nach unten vorstehenden Abschnitt auf, der so gestaltet ist, dass dieser hinter eine Dachlatte angelegt werden kann, um so das Solarmodul auf einem schrägen Dach zu halten. Auf diese Welse ist es möglich, das Solarmodul wie eine Dachziegel an einer Dachlatte anzubringen.

Ein solches Solarmodul kann allerdings wie eine Dachziegel bei einem Sturm heruntergeweht werden. Der Schaden wäre allerdings ungleich größer Im Vergleich zu einer Dachziegel. Um ohne großen Aufwand einen solchen Schaden zu vermeiden, weist der nach unten vorstehende Abschnitt wenigstens eine Bohrung auf. Durch diese Bohrungen hindurch kann das Solarmodul mit wenigstens einer Schraube an der Dachplatte befestigt werden. Das Solarmodul ist damit verbessert gegen Sturmschaden gesichert und kann dennoch einfach und zuverlässig montiert werden.

In einer Ausführungsform der Erfindung weist das untere Rahmenelement einen vorstehenden Abschnitt auf, der an der Oberseite parallel zur Hauptoberfläche des Solar Moduls verläuft. Es ist vorgesehen, diesen vorstehenden Abschnitt auf ein oberes Rahmenelement aufzulegen, das zu einem angrenzenden bereits auf einem Dach befestigten unteren Solarmodul gehört. Auf diese Weise wird erreicht, dass zwei solche Solarmodule eine geschlossene Fläche bilden, die das Dach gegen Eindringen von Wasser schützt. Da der vorstehende Abschnitt des unteren Rahmenelementes sehr dünn sein kann, gibt es eine kaum sichtbare Stufe beim Übergang von einem unteren Solarmodul zu einem angrenzenden oberen Solarmodul auf einem schrägen Dach. Entsprechend optisch ansprechend können die Solarmodule auf einem Dach aufgebracht werden.

Um die teuren Solarmodule gegen Sturmschäden weiter verbessert zu sichern, kann ein unteres und ein oberes Rahmenelement beispielsweise mit Nut und Feder oder zwei vergleichbaren Kupplungselementen versehen sein. Wird die Feder in die Nut geschoben, so ist dann auch ein unteres Rahmenelement befestigt. Im Fall eines Sturms kann daher ein unteres Rahmenelement nicht angehoben werden. Solarmodule sind damit weiter verbessert gegen Sturmschäden gesichert.

Als besonders vorteilhaft hat sich allerdings herausgestellt, auf solche zusätzlichen Kupplungselemente zu verzichten und stattdessen die Solarmodule so auf einem Dach zu montieren, dass die Abschnitte mit dem rechteckigen Querschnitt dicht aneinander grenzen. Sind die vorstehenden Abschnitte eines jeden oberen Rahmenelements an einer Dachlatte durch Schrauben befestigt, so kann dann ein unteres Rahmenelement nicht herausgehoben werden, da dieses durch das angrenzende obere Rahmenelement eines darunter angebrachten Solarmoduls verhindert wird. Es gelingt so also ebenfalls ein besonders guter Schutz vor Sturmschäden, ohne Raum für zusätzliche Kupplungselemente vorzusehen. Auch muss bei einer Montage nicht darauf geachtet werden, dass solche zusätzlichen Kupplungselemente miteinander verbunden werden.

Die seltlichen Rahmenelemente weisen in einer Ausführungsform der Erfindung Nuten und Federn auf, wobei die Nut insbesondere im Inneren eine Dichtung aufweist. Eine Feder eines seitlichen Rahmenelements wird In die Nut eines angrenzenden Rahmenelements geschoben. Durch die Dichtung entsteht eine wasserdichte Verbindung zwischen zwei Solarmodulen. Insgesamt entsteht so eine Fläche, die das Dach gegen Eindringen von Wasser schützt.

In einer Ausführungsform der Erfindung besteht der Rahmen aus einem. Metall und zwar Insbesondere aus Aluminium. Besonders bevorzugt ist allerdings ein glasfaserverstärktes Material einzusetzen. Dieses hat den Vorteil, leicht und elektrisch nicht leitend zu sein. Es kann ferner nahezu den gleichen Ausdehnungskoeffizienten wie eine Solarzelle, der dem Ausdehnungskoeffizienten von Glas entspricht bzw. ähnelt, aufweisen, wenn das mit Glasfasern verstärkte Material entsprechend geeignet verstärkt worden Ist. Zugleich kann das glasfaserverstärkte Material UV-beständig eingefärbt werden. Dies ermöglicht es, besonders einfach die Farbe zu variieren und entsprechend an die Farbe des Daches anzupassen.

Besonders bevorzugt besteht der Rahmen aus vier Einzelteilen, also aus zwei einzelnen seitlichen Rahmenelementen sowie einem oberen und einem unteren Rahmenelement. Die vier verschiedenen Rahmenelemente werden durch Eckverbinder miteinander formschlüssig verbunden und zwar insbesondere durch Formschluss. Dies macht es möglich, eine Solarzelle besonders einfach mit dem Rahmen zu verbinden. Eine kostengünstige Herstellung ist so möglich.

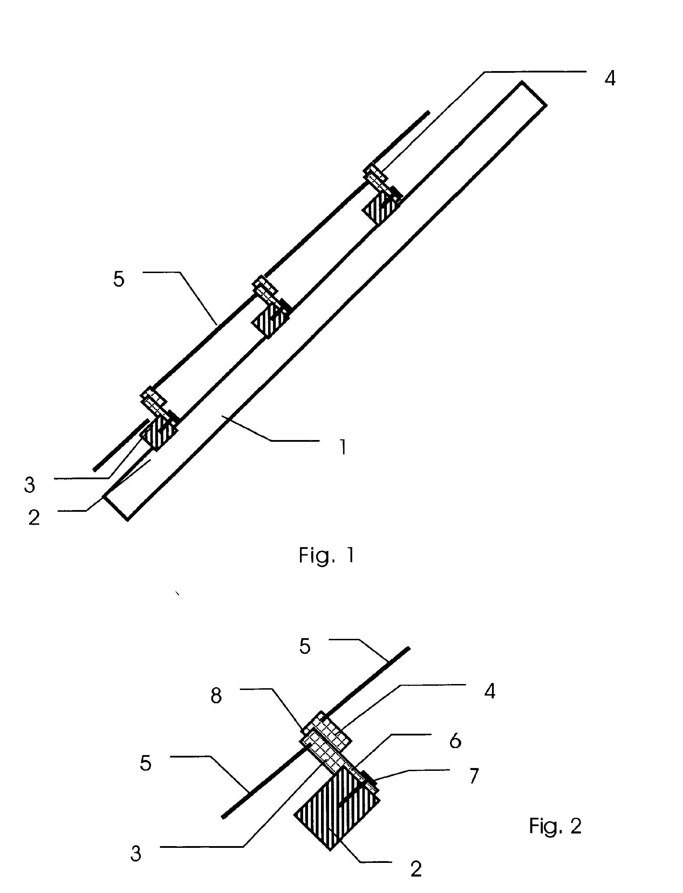

Ein schräges Dach weist mehrere parallel verlaufende Dachsparren 1 auf, auf denen horizontal verlaufende Dachlatten 2 befestigt sind, wie Figur 1 In einer seitlichen Ansicht Im Schnitt verdeutlicht. In Figur 1 werden obere Rahmenelemente 3 und untere Rahmenalemente 4 gezeigt, die jeweils eine Solarzelle 5 einrahmen.

Figur 2 zeigt einen vergrößerten Ausschnitt aus Figur 1.

Das obere Rahmenelement weist ein vorstehendes Element 6 an einem Ende auf. Dieses Element steht gegenüber den übrigen Teilen des Rahmens nach unten hervor. Hierdurch wird ein Solarmodul wie eine Ziegel auf dem Dach aufgelegt. Das vorstehende Element bzw. der nach unten vorstehende Abschnitt 6 hintergreift eine Dachlatte 2, vergleichbar wie bei Dachziegeln. Dadurch ist das Solarmodul wie ein Dachziegel auf ein Dach aufgelegt worden.

Das vorstehende Element 6 weist Löcher auf, um das Modul mit der Dachlatte mit Schrauben 7 zu verschrauben. Das in Figur 2 gezeigte untere Rahmenelement 4 eines ersten Solarmoduls grenzt an das obere Rahmenelement 3 eines darunter liegenden zweiten Solarmoduls an. Es weist einen vorstehenden Abschnitt 8 auf, der parallel zur Hauptoberfläche der Solarzellen 5 verläuft. Im montierten Zustand liegt der vorstehende Abschnitt bzw. vorstehender Bereich 8 auf dem oberen Rahmenelement des zweiten unteren Solarmoduls auf. Dadurch wird der Übergang gegen Eindringen von Wasser hinreichend gut geschützt. Es ist allerdings auch möglich, in einem solchen Übergangsbereich laminierte Folien vorzusehen. Diese laminierten Folien bewirken eine Schwingungsdämpfung, damit keine Klappergeräusche entstehen.

Es sind ferner Nuten mit darin befindlichen Abdichtungen in den Rahmenelementen vorgesehen, um die Ränder der Solarzellen 5 in diese Nuten hineinzuschieben und so wasserdicht mit den Rahmen zu verbinden.

Das untere Rahmenelement 4 des ersten Solarmoduls grenzt so dicht an das obere Rahmenelement des zweiten Solarmoduls an, dass das untere Rahmenelement nicht mehr angehoben werden kann. So ist eine Befestigung auch in diesem unteren Bereich eines Solarmoduls sichergestellt.

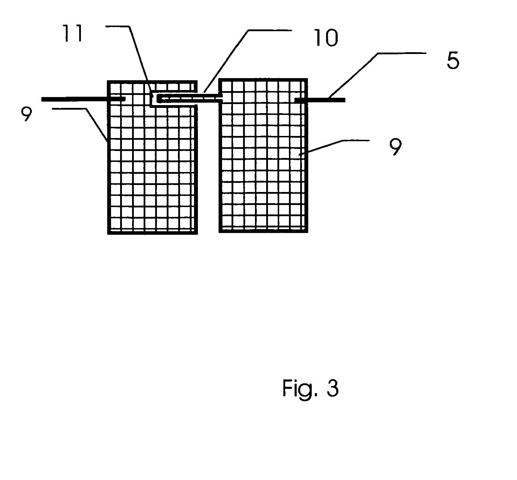

Die seitlichen Rahmenelemente 9 weisen ein Nut-Feder-System 10, 11 auf, wie die Figur 3 im Schnitt zeigt. Das Nut-Feder-System liegt bevorzugt auf Höhe der Solarzellen. Wird ein Solarmodul mit einem nächsten an dieser Seite verbunden, so wird die Nut 10 in die Feder 11 hineingeschoben. In der Nut befindet eine nicht dargestellte Dichtung. Besonders bevorzugt besteht diese Dichtung aus einer Moosgummi-Dichtschnur.

Durch dieses Nut-Schlenen-System wird erreicht, dass eine Dichtigkeit auch an diesen Seiten gewährleistet ist. Es muss also nicht zusätzilch für eine Wasserabdichtung In diesem Bereich bei diesem Übergang gesorgt werden, beispielsweise durch eine gesonderte Abdeckung.

Das Nut-Federsystem ermöglicht es ferner, dass nicht auf eine sehr genaue Montage geachtet werden muss. Besonders bevorzugst beträgt die Toleranz, die möglich ist, wenigstens 3 mm. Ermöglicht wird eine solche Toleranz Insbesondere bei Verwendung einer Moosgummi-Dichtschnur.

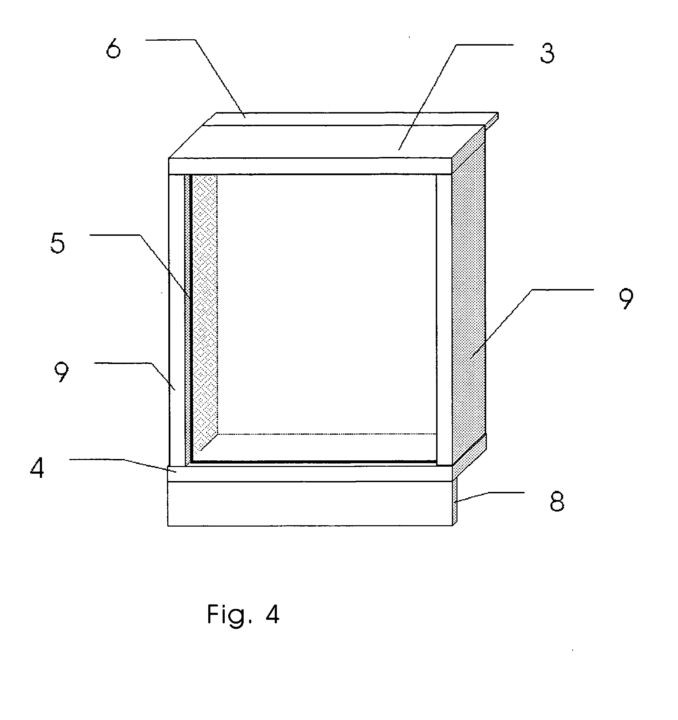

Fig. 4 skizziert eine dreidimensionale Darstellung, allerdings ohne Nut und Feder an den seitlichen Rahmenelementen 9 sowie Löcher Im vorstehenden Abschnitt 6.

Die Solarmodule können sehr einfach auf einem Dach montiert werden. Mit Hilfe eines Krans und eines Saugnapfes wird ein Modul über das Dach gehoben. Es muss nun nur noch geeignet abgesenkt und verschraubt werden.

Ein jeder Rahmen Ist so ausgelegt, dass eine schindelförmige Überlappung Im Stoßbereich von oben nach unten vorhanden ist. Damit erfüllt das System eine Doppelfunktion. Einerseits werden die Module so gehalten, dass kein zusätzliches Element zur Abdichtung erforderlich Ist. Andererseits tragen diese zur Energieversorgung bei. Die Rahmenelemente schützen ferner die Module vor Beschädigung bei Verpackung. Transport und Montage.

Die Module können mit Photovoltaikelementen ausgestattet sein. Sie können mit Solarkollektoren für Warmwasser ausgestattet sein. Es ist eine Kombination auf einem Hausdach problemlos möglich. Dies gilt vor allem dann, wenn das gleiche Rahmensystem und die zueinander passenden Größen eingesetzt werden.

Der Anschluss an das Warmwassersystem oder an eine Stromsystem braucht gegenüber herkömmlichen Lösungen nicht verändert werden.

Das Rahmensystem hat den Vorteil, sich wie ein Dachziegel zu verhalten. Es gibt also ebenfalls eine Hinterlüftung. Diese ist von Vorteil, um im Fall eines Photovoltaiksystems dieses nicht zu heiß werden zu lassen. Damit wird der Wirkungsgrad erhalten, wenn das Fotovoltaiksystem nicht zu stark aufgeheizt wird. Dies gilt vor allem, wenn der Rahmen in Übereinstimmung mit dem ersten Anspruch relativ breit ist und so ein großes Volumen hinter der Solarzelle vorhanden ist. Eine separate Kühlung ist nicht erforderlich.

Die Herstellung der Rahmenelemente ist problemlos möglich. So können die Rahmenelemente durch Strangziehen hergestellt werden. Anschließend müssen die Übergänge noch auf Gehrung geschnitten werden. Möglicherweise, je nach Ausführungsform, müssen einige Teile mit einem Fräser noch nachbearbeitet, beispielsweise noch mit Aussparungen versehen werden. Durch Stanzen könnte auch eine gegebenenfalls vorteilhafte Ausnehmung bereitgestellt werden.

## Patentansprüche

1. Solarmodul für den Einbau In ein Schrägdach mit einem durch Rahmenelemente (3, 4, 9) gebildeten Rahmen und einer vom Rahmen gehaltenen Solarzelle (5), wobei der Rahmen zwei seitliche Rahmenelemente (9) sowie ein oberes und ein unteres Rahmenelement (3, 4) umfasst, die einen rechteckigen Querschnitt aufweisen, wobei der rechteckige Querschnitt zwei lange und zwei schmale Seiten aufweist, wobei die vier Rahmenelemente (3, 4, 9) so miteinander verbunden sind, dass die langen Seiten mit der Solarzelle einen rechten Winkel einschließen, **dadurch gekennzeichnet, dass** das obere Rahmenelement (3) einen gegenüber den übrigen Teilen des Rahmens nach unten vorstehenden Abschnitt (6) aufweist, der so ausgestaltet ist, dass dieser hinter eine Dachlatte (2) angelegt werden kann, die Dachlatte (2) hintergreifend, um so das Solarmodul auf einem schrägen Dach zu halten.

2. Solarmodul nach Anspruch 1 mit einem vorstehenden Abschnitt des unteren Rahmenelements, welches parallel zur Oberfläche der Solarzelle angeordnet ist.

3. Solarmodul nach Anspruch 1 oder 2 mit einem Nut-Feder-System (10, 11) an den seitlichen Rahmenelementen.

4. Solarmodul nach dem vorhergehenden Anspruch mit einer Dichtung, die eine wasserdichte Verbindung der Nut (11) mit der Feder (10) ermöglicht.

5. Solarmodul nach einem der vorhergehenden Ansprüche, wobei die Rahmenelemente aus mit Glasfasern verstärktem Kunststoff bestehen.

6. Solarmodul nach einem der vorhergehenden Ansprüche, wobei der Rahmen aus vier einzelnen Rahmenelementen besteht, die über Eckverbinder miteinander verbunden sind und zwar vorzugsweise durch Formschluss.

7. Verfahren zum Montierten eines Solarmoduls nach einem der vorhergehenden Ansprüche, **gekennzeichnet dadurch, dass** das Solarmodul mit seinem nach unten vorstehenden Abschnitt (6) In einer Dochlatte (2) eines schrägen Dachs eingehängt wird.

## Claims

1. Solar module for installation in a pitched roof, comprising a frame formed by frame members (3, 4, 9) and a solar cell (5) held by the frame, wherein the frame comprises two lateral frame members (9) and an upper and a lower frame member (3, 4) which have a rectangular cross section, wherein the rectangular cross section has two long and two narrow sides, wherein the four frame members (3, 4, 9) are interconnected such that the long sides include a right angle with the solar cell, **characterized in that** the upper frame member (3) has a portion (6) that protrudes downward relative to the other parts of the frame which is configured in such a way that it can be placed behind a batten (2) so as to reach behind the batten (2) in order thus to retain the solar module on a pitched roof.

2. Solar module according to claim 1, comprising a projecting portion of the lower frame member which is disposed parallel to the surface of the solar cell.

3. Solar module according to claim 1 or 2, comprising a tongue-and-groove system (10, 11) on the lateral frame members.

4. Solar module according to the preceding claim, comprising a gasket which makes a watertight connection of the groove (11) with the tongue (10) possible.

5. Solar module according to any one of the preceding claims, wherein the frame members consist of fiberglass-reinforced plastic.

6. Solar module according to any one of the preceding claims, wherein the frame consists of four individual frame members connected by means of corner joints, preferably by positive fit.

7. Method for mounting a solar module according to any one of the preceding claims, **characterized in that** the solar module, with its downwardly projecting portion (6) is hooked into a batten (2) of a pitched roof.

## Revendications

1. Module solaire pour le montage dans un toit pentu, comprenant un cadre formé par des éléments de cadre (3, 4, 9) et une cellule solaire (5) retenue par le cadre, le cadre comprenant deux éléments de cadre latéraux (9) ainsi qu'un élément de cadre supérieur et inférieur (3, 4) qui présentent une section transversale rectangulaire, la section transversale rectangulaire comprenant deux côtés longs et deux côtés courts, les quatre éléments de cadre (3, 4, 9) étant reliés les uns aux autres de sorte que les côtés longs inclurent un angle droit avec la cellule solaire, **caractérisé en ce que** l'élément de cadre supérieur (3) comprend une partie (6) qui fait saillie vers le bas par rapport aux autres éléments du cadre, laquelle est formée de sorte qu'on peut disposer celle-ci derrière une volige (2) en s'engrenant par derrière avec la dite volige (2) pour ainsi retenir le module solaire sur un toit pentu.

2. Module solaire selon la revendication 1, comprenant une partie saillante de l'élément de cadre inférieur laquelle est disposée en parallèle à la surface de la cellule solaire.

3. Module solaire selon la revendication 1 ou 2, comprenant un système de languette et rainure (10, 11) sur les éléments de cadre latéraux.

4. Module solaire selon la revendication précédente, comprenant une garniture qui permet une liaison étanche à l'eau entre la rainure (11) et la languette (10).

5. Module solaire selon l'une des revendications précédentes, dans lequel les éléments de cadre sont composés de matière artificielle renforcée par fibres de verre.

6. Module solaire selon l'une des revendications précédentes, dans lequel le cadre se compose de quatre éléments de cadre individuels qui sont reliés les uns aux autres par des entretoises d'angle, de préférence à engagement positif.

7. Procédé de montage d'un module solaire selon l'une des revendications précédentes, **caractérisé en ce qu'**on accroche le module solaire avec sa partie (6) faisant saillie vers le bas dans une volige (2) d'un toit pentu.
